Europäisches Patentamt

European Patent Office   (11) Publication number: **0 226 358**

Office européen des brevets   **A1**

(12) **EUROPEAN PATENT APPLICATION**

(21) Application number: 86309209.4   (51) Int. Cl.4: **F16D 25/12**

(22) Date of filing: 26.11.86

(30) Priority: 03.12.85 GB 8529776

(43) Date of publication of application:
24.06.87 Bulletin 87/26

(84) Designated Contracting States:
DE FR GB IT

(71) Applicant: LUCAS INDUSTRIES public limited
company
Great King Street
Birmingham, B19 2XF West Midlands(GB)

(72) Inventor: Reynolds, Desmond Henry James
156 Tamworth Road
Sutton Coldfield West Midlands(GB)
Inventor: Powell, Michael Thomas
41 Orchard Croft
Barnt Green Birmingham B45 8NJ(GB)

(74) Representative: Spall, Christopher John et al
BARKER, BRETTELL & DUNCAN 138 Hagley
Road
Edgbaston Birmingham B16 9PW(GB)

(54) Clutch servos.

(57) A clutch servo 1 for a vehicle cable-operated clutch system has a housing 3 in which works an input member 5 to which an input force is applied by a cable assembly 2, an output member 6 for connection to the clutch, and through which an output force acts, and a movable wall 4 for augmenting the output force, the movable wall being operated by pressurisation of a fluid pressure chamber 8 controlled by valve means 9 in response to the input force. In order to provide a simple construction with reliable valve actuation, the valve means 9 is located in a piston 12 of the movable wall 4, and is actuated in response to the input force, which is applied directly by the input member 5, and an opposing force provided by resilient means 10 located in the servo, with the output member 6 being operated only through the movable wall 4.

FIG 1

## CLUTCH SERVOS

This invention relates to clutch servos for vehicle cable-operated clutch systems of the kind comprising a housing in which works an input member to which an input force is applied by a cable assembly, an output member for connection to the clutch and through which an output force acts, a movable wall for augmenting the output force, the movable wall being operated by pressurisation of a fluid pressure chamber, and valve means for controlling pressurisation of the chamber in response to the input force.

GB-A-1 550 613 shows a vacuum-operated servo of the kind set forth in which the valve means is located in the movable wall and is actuated by movement of the input member in response to the input force. Operation of the valve means is controlled by the input force and the output force, and such operation, which ensures that the output force is proportional to the input force, has been taken from brake servos, where it is necessary. However, such valve means may not operate very well in cable-operated clutch systems, where there is more lost-motion. In fact, it is not essential in a clutch system for the output force to be proportional to the input force, and the present invention uses this fact to provide a clutch servo which has reliable valve actuation and a simple construction.

According to our invention, in a clutch servo of the kind set forth where the valve means is located in the movable wall, and is actuated directly by the input member, the valve means is operable in response to the input force and an opposing force provided by resilient means located in the servo, the servo being so constructed and arranged that in normal operation the output force acting through the output member is provided solely by operation of the movable wall.

Operation of the valve means against the force in the resilient means, which is substantially constant, rather than the variable output force means that the valve means can have a simpler construction, and be actuated more reliably, with a better "feel" for the operator. Further, it is not necessary for the input and output members to be connected, so that the construction of the servo can be simpler.

If the movable wall fails to operate in response to actuation of the valve means, the input member operates it directly.

The movable wall preferably includes a piston which works in the housing and has a longitudinal bore in which the valve means is located.

The valve means has the usual inlet and exhaust valves controlling communication of the fluid pressure chamber with a source of fluid pressure or a reservoir for fluid. The valve means conveniently comprises a valve member provided on the movable wall piston, the valve member co-operating with a valve seat carried by the input member to form the inlet valve, and a further valve seat on the movable wall piston to form the exhaust valve.

The resilient means includes a relatively strong control spring, acting between the movable wall piston and the input member, and this spring provides most of the force controlling actuation of the valve means. A light spring biassing the valve member towards the valve seats also forms part of the resilient means.

The input member may also comprise a piston working in the bore in the movable wall piston, and connected to the cable assembly.

The output member preferably comprises a hollow retainer which is secured to the movable wall piston. The cable assembly is attached to the output member, and runs to the clutch, preferably through an automatic adjuster.

Conveniently, the servo is vacuum-operated, and the movable wall includes a flexible diaphragm.

An embodiment of our invention is shown in the accompanying drawings, in which:-

Figure 1 shows a longitudinal section through a clutch servo; and

Figure 2 is a graph of pedal effort against pedal travel.

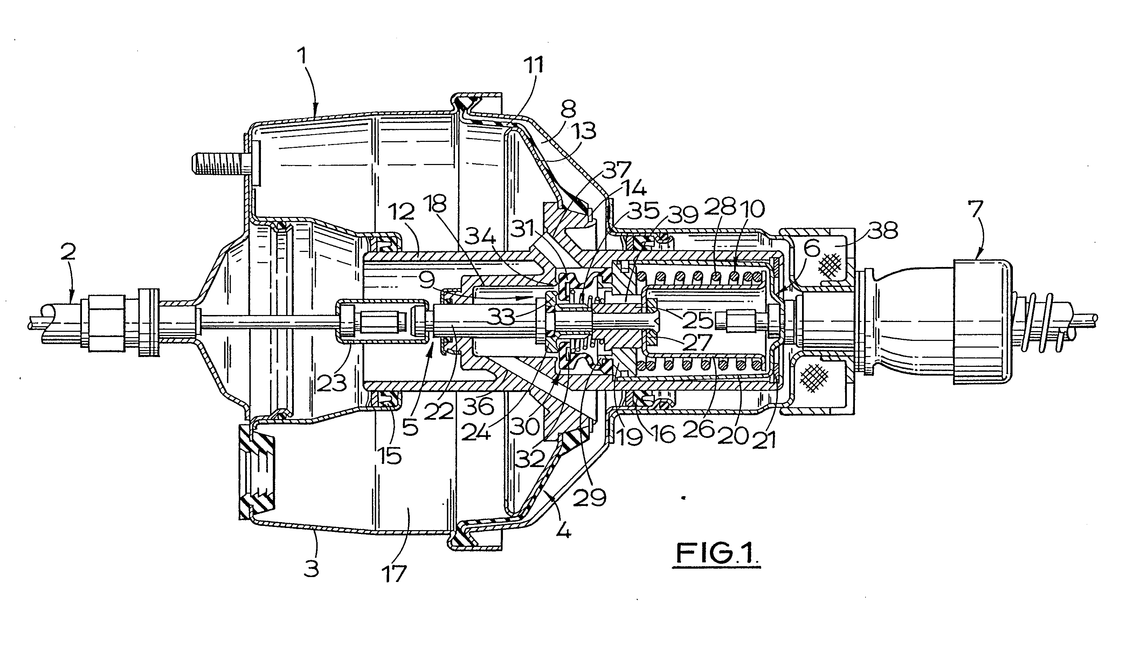

Figure 1 shows a vacuum-operated servo 1 for a vehicle clutch system, operated by a conventional cable 2. The servo 1 has a multi-part housing 3 in which a movable wall 4 works. An input force from a pedal (not shown) is applied via the input end of the cable 2 to an input member 5 which works in the movable wall 4. The output end of the cable 2 is attached to an output member 6 which is secured to the movable wall 4, the output force being applied to the clutch (not shown) through an automatic adjuster 7. The movable wall 4 is operated by pressurisation of a fluid pressure chamber 8 under the control of valve means 9 located in the movable wall 4, and operated by the input force and an opposing force provided by resilient means 10 located in the housing 3.

The movable wall 4 comprises a flexible rubber diaphragm 11, which is clamped between two adjacent housing parts, and a piston 12 connected to the diaphragm 11 by a diaphragm plate 13 and a circlip 14. The piston 12 is of generally cylindrical outline, and works through spaced seals 15,16 in the housing 3. The fluid pressure chamber 8 is defined on the rearward side of the movable wall 4, and on the forward side is a chamber 17 which is connected to a vacuum source (not shown). The piston 12 also has a longitudinal stepped bore 18, with an annular bush 19 located at a step in the bore 18.

The output member 6 comprises a cup-shaped hollow retainer 20 which is secured at its forward end to the bush 19. The rearward end of the retainer 20 is held by a circlip 21 round which the rearward end of the movable wall piston 12 is deformed, so that the retainer 20 is securely fixed to the movable wall piston 12. At its rearward end the retainer 20 is attached to the inner part of the cable 2.

The input member 5 comprises a piston 22 which works in the bore 18. At its forward end the piston 22 is attached to the inner part of the cable 2 by a cage member 23, while at its rearward end it carries a valve seat member 24, a valve actuator 25, which slides in the bush 19, and an abutment member 26. These three members are secured to the piston 22 by a washer 27. The member 26 forms an abutment for a control spring 28, which forms part of the resilient means 10. The other end of the control spring 28 engages the bush 19.

The bush 19 also has a forwardly-extending annular projection 29, which locates a valve member 30 of the valve means 9. The valve member 30 comprises an annular seal 31 attached to a disc 32. The valve member 30 co-operates with a valve seat 33 formed on the member 24 to form an inlet valve, and with a further seat 34 formed on the piston 12 to form an exhaust valve. A light spring 35 acting between the disc 32 and the valve actuator 25 biasses the valve member 30 towards both seats. The spring 35 also forms part of the resilient means 10, but most of the force for controlling actuation of the valve means 9 is provided by the larger, relatively strong spring 28. The exhaust valve controls communication between the fluid pressure chamber 8, which is connected to the bore 18 forward of the valve means 9 by a passage 36, and the vacuum chamber 17, which is similarly connected to the bore 18 by a passage 37 to the rear of the valve means 9. The inlet valve controls communication between the fluid pressure chamber 8 and atmosphere, to which the rearward end of the bore 18 is open. Air enters through filters 38 provided on the housing 3, and then passes through openings in the housing 3, the retainer 20 and the abutment member 26, and slots 39 in the actuator 25 to the inlet valve.

In the inoperative position shown the exhaust valve is open and the inlet valve is closed, so that chamber 8 is connected to vacuum. The movable wall 4 is held in its retracted position by the clutch return spring acting through the cable 2, adjuster 7 (which is of conventional construction) and retainer output 20. The control spring 28 keeps the input piston 22 in its retracted position, and it should be noted that this spring 28 is not as strong as the clutch return spring.

When a load is applied to the clutch pedal the lost-motion in the input part of the cable 2 is taken up, and then a tension force builds up in the inner cable and the input piston 22, this force being opposed by the force in the control spring 28, and to a much lesser extent by the force in the spring 35. (The movable wall 4 remains in its retracted position due to the clutch return spring.) When the tension force overcomes the opposing force the input piston 22 moves forwardly, taking the abutment member 26, actuator 25 and valve seat 24 with it. The valve member 30 also moves, due to the spring 35, until it engages the seat 34 to close the exhaust valve, isolating the chamber 8 from the vacuum source. Further movement of the input piston 22 then moves the valve seat 33 out of engagement with the valve member 30 to open the inlet valve and pressurise the chamber 8. This operates the movable wall 4, and with it the retainer 20 in order to take up lost-motion in the output part of the cable 2, and apply a tension force to disengage the clutch. Once the clutch is disengaged the forces in the various springs act to close the inlet valve, so that the servo is in its balanced position.

When the load on the pedal is removed the tension force in the input part of the cable decreases, so that control spring 28 moves the input piston 22 rearwardly, which opens the exhaust valve again. Reduction of pressure in the chamber 8 enables the movable wall 4 to return to its retracted position under the influence of the clutch return spring. During this return stroke it is only the control spring 28 that controls actuation of the valve means 8, as the inlet valve remains closed. The adjuster 7 may also operate during the return stroke, if it is necessary to adjust the cable length to compensate for wear of the clutch linings.

It will be noted that in the normal operation described above the output force is provided solely by operation of the movable wall 4, and that no force is transmitted directly from the input piston 22 to the retainer 20. However, if the movable wall 4 fails to operate in response to actuation of the valve means 8, the clutch can still be operated, as the input force will be transmitted to the movable wall 4 by the engagement of the abutment member 26 with the bush 19, and hence to the retainer 20.

Actuation of the valve means 8 by the input force and the substantially constant force in the resilient means 10 rather than the variable output force has several advantages. For example, it means that the valve means itself can have a simpler design, and can be actuated more reliably, with a consistent "feel" for the operator. It will also be noted that operation of the pedal only needs to take up the lost-motion in the input part of the system, as the lost-motion in the rest of the system is taken up by operation of the movable wall. Lastly, the construction of the servo itself is also simple, as there is no need for a connection between the input and output members, other than the one provided by the movable wall.

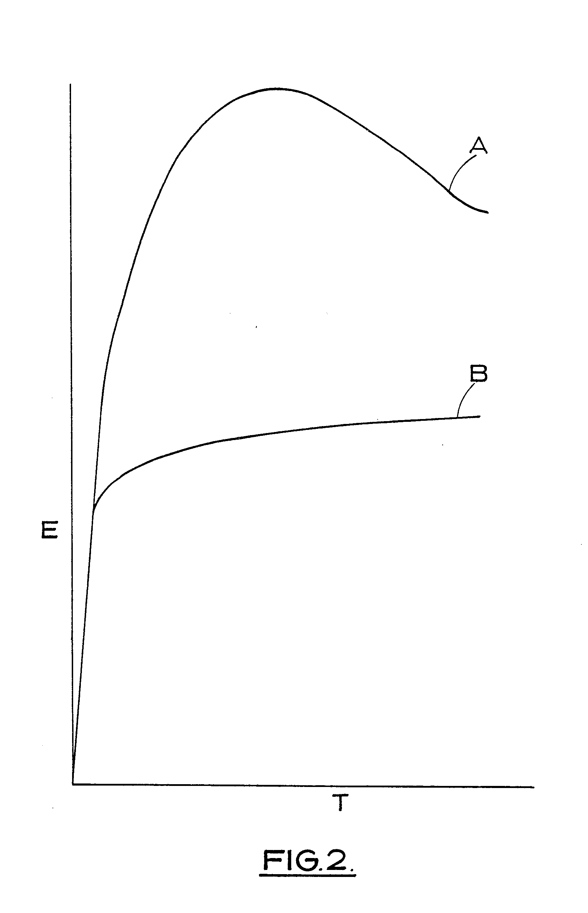

Figure 2 is a graph of pedal effort E against pedal travel T, on which line A shows operation of the clutch by means of a standard cable assembly (i.e. without a clutch servo) and line B represents operation of the clutch using the servo of Figure 1. The use of the servo reduces substantially the pedal effort required, as well as providing smoother operation.

## Claims

1. A clutch servo for a vehicle cable-operated clutch system comprising a housing (3) in which works an input member (5) to which an input force is applied by a cable assembly (2), an output member (6) for connection to the clutch and through which an output force acts, a movable wall (4) for augmenting the output force, the movable wall (4) being operated by pressurisation of a fluid pressure chamber (8), and valve means (9) for controlling pressurisation of the chamber (8) in response to the input force, the valve means (9) being located in the movable wall (4) and actuated directly by the input member (5), characterised in that the valve means (9) is operable in response to the input force and an opposing force provided by resilient means (10) located in the servo (1), the servo being so constructed and arranged that in normal operation the output force acting through the output member (6) is provided solely by operation of the movable wall (4).

2. A clutch servo according to claim 1, in which the movable wall (4) includes a piston (12) which works in the housing (3) and has a longitudinal bore (18) in which the valve means (9) is located.

3. A clutch servo according to claim 1 or claim 2, in which the valve means (9) has an inlet valve controlling communication between the fluid pressure chamber (8) and a source of fluid pressure, and an exhaust valve for controlling communication between the fluid pressure chamber (8) and a reservoir for fluid.

4. A clutch servo according to claim 2 and claim 3, in which the valve means (9) comprises a valve member (30) provided on the movable wall piston (12), the valve member (30) co-operating with a valve seat (33) carried by the input member (5) to form the inlet valve, and with a further valve seat (34) on the piston (12) to form the exhaust valve.

5. A clutch servo according to any of claims 2 to 4, in which the resilient means (10) includes a relatively strong control spring (28) acting between the movable wall piston (12) and the input member (5).

6. A clutch servo according to claim 4 and claim 5, in which the resilient means (10) also includes a light spring (35) biassing the valve member (30) towards the valve seats (33, 34).

7. A clutch servo according to any of claims 2 to 6, in which the input member (5) comprises a piston (22) which works in the bore (18) of the movable wall piston (12) and is connected to the cable assembly (2).

8. A clutch servo according to any of claims 2 to 7, in which the output member (6) comprises a hollow retainer (20) secured to the movable wall piston (12), and to the cable assembly (2).

9. A clutch servo according to claim 8, in which the cable assembly (2) runs from the retainer (20) to the clutch through an automatic adjuster (7).

10. A clutch servo according to any preceding claim, in which the servo is vacuum-operated, and the movable wall (4) includes a flexible diaphragm 11.

FIG.1

FIG.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | FR-A-2 516 179 (WABCO FREINAGE) * Whole document * | 1-4,7 | F 16 D 25/12 |
| Y | | 5,6,8-10 | |
| Y | GB-A-2 138 521 (NIPPON AIR BRAKE) * Whole document * | 5,6,10 | |
| A | | 1-4 | |
| Y | GB-A-2 121 900 (LUCAS INDUSTRIES) * Pages 3,4; figure 3 * | 8,9 | |
| A | | 1-3,7 | TECHNICAL FIELDS SEARCHED (Int. Cl.4) |
| P,X | EP-A-0 186 580 (WABCO WESTINGHOUSE) * Whole document * | 1-7 | F 16 D 25/00 |
| D,A | GB-A-1 550 613 (AUTOMOTIVE PRODUCTS LTD) | | |

The present search report has been drawn up for all claims

| Place of search | Date of completion of the search | Examiner |
|---|---|---|
| THE HAGUE | 10-03-1987 | BALDWIN D.R. |